# EUROPEAN PATENT APPLICATION

(11) **EP 4 684 858 A1**
(43) Date of publication of application: **28.01.2026**
(21) Application number: 25189973.8
(22) Date of filing: 16.07.2025
(51) Int. Cl.: B01D 27/00

(54) **FILTER FOR FUEL AND OILS**

(30) Priority: 25.07.2024 IT 202400017272
(71) Applicant: PIUSI S.p.A., 46029 Suzzara (MN) (IT)
(72) Inventor: ROSSI, Lorenzo, 46034 BORGO VIRGILIO MN (IT)
(74) Representative: Modiano, Micaela Nadia

(57) **Abstract**

A filter (1)for fuels and oils which comprises a substantially cylindrical outer casing (2), which forms internally a filtration chamber (3) provided with at least one inlet (4) and at least one outlet (5) for the fluid to be filtered; the filtration chamber (3) accommodates at least one filtering element (6) arranged around an inner supporting sleeve (7) arranged substantially coaxially to the outer casing (2); means (9) being provided for electrically connecting the filtering element (6) to the ground.

## Description

The present invention relates to a filter for fuels and oils.

Filters for fuels and oils are known which are inserted in particular in transfer circuits, typically by means of a connection head, and have a cartridge portion that is removably coupled to the connection head.

Usually, these filters comprise an outer casing which is substantially cylindrical, typically made of metallic material, and is closed in a downward region by a bottom and in an upward region by a lid and forms, inside it, a filtration chamber, in which a filtering element, also cylindrical in shape, is accommodated and is positioned between the internal surface of the lateral wall of the outer casing and an internal supporting sleeve, which is provided with through openings in its side wall and is substantially coaxial to the axis of the outer casing.

In filters of this type, the fluid to be filtered enters the filtration chamber through inlets formed in the lid, flowing into the space comprised between the filtering element and the lateral wall of the outer casing, and passes through the filtering element along a direction that is substantially radial with respect to the axis of the outer casing, until it reaches the interior of the supporting sleeve, along which it rises towards an outlet located at the center of the lid.

Typically, the filtering element is made of an electrically nonconducting material and, in particular, is made of synthetic fibers.

Usually, two end caps are fixed to the longitudinal ends of the sleeve and of the filtering element and allow the sleeve and the filtering element to be assembled and locked together.

Typically, these end caps are fixed by interposing between the filtering element and said end caps an adhesive layer made of electrically nonconducting resin, which in practice causes the electrical insulation of the filtering element with respect to the end caps and, therefore, also with respect to the other electrically conducting parts of the filter, such as the outer casing.

The flow of the fluid to be filtered through the filtering element causes the formation of electrical charge accumulations in the filtering element due to the triboelectric effect.

If the electrical charges accumulated in the filtering element are not dissipated, they create a difference in electrical potential between the filtering element itself and the rest of the filter, in particular the outer casing, which, as mentioned, is made of metallic material.

When the electrical potential difference between the filtering element and the outer casing thus generated exceeds the dielectric strength of the fuel or oil being filtered, an electrostatic discharge occurs, producing a so-called "electrical fault" in the filter.

Electrostatic discharges cause, in particular, burns in the filtering element, altering its filtration capacity, and in the presence of flammable vapors and oxygen inside the filter can also cause explosions.

To solve this problem, the use of antistatic papers to provide the filtering element has been proposed.

However, antistatic papers are not easily available on the market, as they are produced by only a few companies, are not compatible with all types of fuels and are also very expensive.

The aim of the present invention is to provide a fuel and oil filter capable of improving the background art in one or more of the above aspects.

Within this aim, an object of the invention is to provide a fuel and oil filter capable of preventing the onset of electrical faults in the filter in a simple and effective manner.

Another object of the invention is to provide a fuel and oil filter that is structurally easy to manufacture.

A further object of the present invention is to provide a fuel and oil filter that can be obtained by means of commonly commercially available elements and materials.

Another object of the present invention is to provide a fuel and oil filter capable of giving the greatest assurances of reliability and safety in its use.

A further object of the present invention is to overcome the drawbacks of the background art in a manner that is alternative to any existing solutions.

Not the least object of the invention is to provide a fuel and oil filter that is competitive also from a purely economic point of view.

This aim, as well as these and other objects that will become more apparent hereinafter, are achieved by a fuel and oil filter according to claim 1, optionally provided with one or more of the characteristics of the dependent claims.

Further characteristics and advantages of the invention will become more apparent from the description of a preferred but not exclusive embodiment of the fuel and oil filter according to the invention, illustrated by way of non-limiting example in the accompanying drawings, wherein:

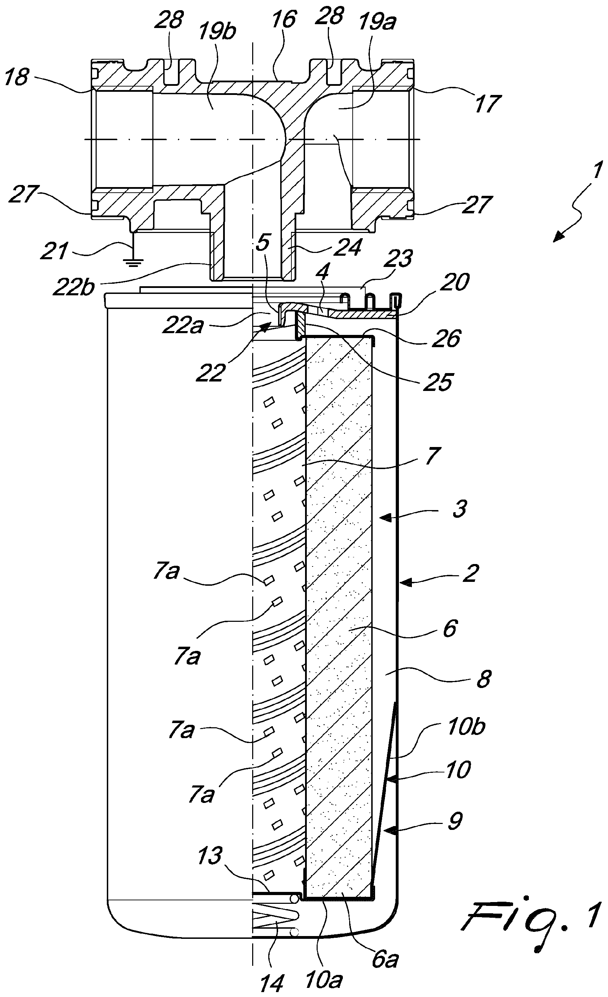

Figure 1 is a partially sectional exploded side elevation view of the filter according to the invention;
Figure 2 is a partial sectional perspective view of the filter according to the invention;
Figure 3 is a perspective view of an electrical contact lamina of the filter according to the invention;
Figure 4 is a top plan view of a part of the filter according to the invention.

With reference to the figures, the fuel and oil filter according to the invention, generally designated by the reference numeral 1, comprises an outer casing 2, which is substantially cylindrical and forms internally a filtration chamber 3.

In particular, the outer casing 2 is conveniently closed at one axial end by a bottom wall 2a, which is advantageously integral with the outer casing 2, and at its opposite axial end by a lid 20, constituted for example by a contoured disk which is connected hermetically, at its peripheral region, to the outer casing 2.

The filtration chamber 3 is provided with one or more inlets 4 and at least one outlet 5 for the fluid to be filtered, which may be, for example, a fuel such as gasoline or the like, or an oil, in particular a lubricating oil or the like.

Conveniently, both the inlets 4 and the outlet 5 are formed at the lid 20.

In particular, the filtration chamber 3 accommodates at least one filtering element 6, which is designed to be crossed by the fluid to be filtered in its path from the inlets 4 to the outlet 5 inside the filtration chamber 3.

The filtering element 6 may be provided, for example, by a pleated sheet of filter paper impregnated with phenolic resin.

Furthermore, the filtering element 6 is arranged around an internal supporting sleeve 7, which is positioned substantially coaxially with respect to the outer casing 2 and is conveniently provided in its side wall with passage openings 7a for the fluid to be filtered.

Between the filtering element 6 and the lateral wall of the outer casing 2 there is an annular space 8, which extends around the axis of the outer casing 2 and communicates with the inlets 4, while the interior of the sleeve 7 is sealed off from the annular space 8 and communicates with the outlet 5.

Means 9 are provided for electrically connecting the filtering element 6 to the ground, which allow the filtering element 6 to be grounded, so as to bring it to the same electrical potential as the ground, avoiding the accumulation of electrical charges in the filtering element 6 and the consequent risk of electrical failure of the filter.

More specifically, the outer casing 2 is advantageously made of an electrically conducting material, in particular a metallic material, and is moreover electrically connected to the ground.

Conveniently, the electrical grounding means 9 comprise means for the electrical connection of the filtering element 6 to the outer casing 2.

The electrical connection means comprise, in turn, at least one electrical contact lamina 10 made of electrically conducting material, such as for example copper.

In particular, the contact lamina 10 has, along its longitudinal extension, at least one first contact portion 10a, in an electrical connection relationship with the filtering element 6, and at least one second contact portion 10b, which in turn is arranged in electrical contact with the outer casing 2.

Advantageously, the first contact portion 10a of the contact lamina 10 is contoured so as to form a receiving region 11, into which it is possible to insert a portion of the filtering element 6 and, more particularly, a terminal edge 6a of the filtering element itself, for example the one directed toward the bottom 2a of the outer casing 2.

The second contact portion 10b of the contact lamina 10 comprises, in turn, a part 12 of the contact lamina 10 which extends inside the annular space 8 and is placed in contact, at least by means of an end portion thereof, with the side wall of the outer casing 2.

As shown, the part 12 of the contact lamina 10 is conveniently inclined with respect to the axis of the outer casing and is elastically flexible toward or away from the axis of the outer casing 2, so as to facilitate the insertion of the contact lamina 10 in the filtration chamber 3, by means of its sliding from the opening of the outer casing 2 closed by the lid 20, and so that the second contact portion 10b is elastically loaded in the direction of the side wall of the outer casing 2, so as to ensure that it remains in contact with the outer casing 2.

Again to ensure the stability of the electrical contact provided by the contact lamina 10, the contact lamina 10 is conveniently fixed by welding to the sleeve 7.

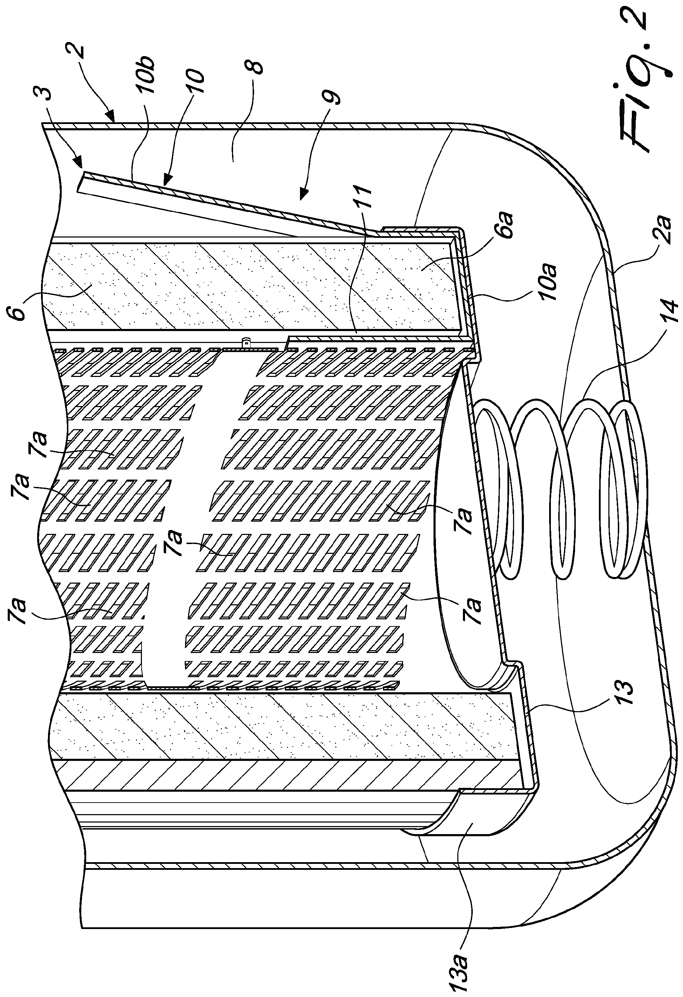

As can be seen in particular in Figure 2, the sleeve 7 and the filtering element 6 are coupled, at their end directed toward the bottom wall 2a of the outer casing 2, to a supporting plate or end face 13.

A further end face 26 is also fixed to the longitudinal end of the sleeve 7 and of the filtering element 6 that is directed toward the lid 20.

In particular, the filtering element 6 and the sleeve 7 are conveniently fixed to the plate 13 and to the end face 26 by interposing an adhesive layer of nonconducting resin, not shown.

The plate 13 is kept spaced from the bottom wall 2a of the outer casing 2 by elastic means, constituted for example by a helical spring 14, interposed between the plate 12 and the bottom wall 2a of the outer casing 2.

Conveniently, the contact lamina 10 is interposed, with at least one part thereof, between the filtering element 6 and the plate 12.

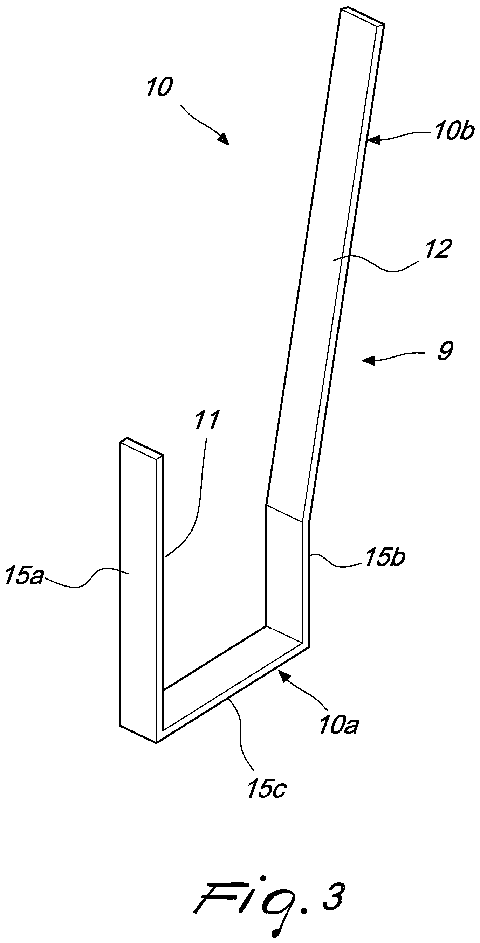

In greater detail, with particular reference to Figure 3, the first contact portion 10a of the contact lamina 10 is substantially U-shaped, forming two lateral arms 15a and 15b of the U shape, which are substantially parallel and mutually opposite.

In particular, the lateral arms 15a, 15b of the U shape are arranged substantially parallel to the axis of the outer casing 2 and in practice delimit laterally the receiving region 11 of the terminal edge 6a of the filtering element 6, and are arranged on mutually opposite sides with respect to the filtering element 6.

More particularly, one of the lateral arms, more precisely the one designated by the reference numeral 15a in the figures, is interposed between the sleeve 7 and the filtering element 6 and is conveniently welded to the sleeve 7, while the other lateral arm 15b, which is conveniently contiguous to the part 12 of the contact lamina 10, is interposed between the filtering element 6 and a peripheral rim 13a of the plate 13 which protrudes in the opposite direction with respect to the bottom wall 2a of the outer casing 2.

The two lateral arms 15a, 15b are furthermore connected to each other by a connecting arm 15c of the U shape, which is arranged substantially at right angles to the axis of the outer casing 2 and is interposed between the terminal edge 6a of the filtering element 6 directed toward the plate 13 and the plate 13 itself.

It should be noted that the presence of a nonconducting adhesive layer between the filtering element 6 and the plate 13 and between the filtering element 6 and the end face 26 does not allow electrical continuity between the filtering element 6 and the outer casing 2 through the spring 14 and the lid 20.

It should be noted that the outer casing 2 is conveniently mated detachably and hermetically to a connection head 16, which allows the filter to be inserted into a circuit for the circulation of the fluid to be filtered.

In particular, the connection head 16 advantageously has a body made of electrically conducting material, and the mating between the outer casing and the connection head 16 is provided in such a way as to ensure electrical continuity between the outer casing 2 and the body of the connection head 16, as will also be explained below.

The body of the connection head 16 forms an intake connection 17 and a discharge connection 18, which can be connected to the fluid circulation circuit.

More particularly, the intake connection 17 is connected to the inlets 4 through an intake duct 19a formed inside the body of the connection head 16, while the discharge connection 18 is connected to the outlet 5 through a discharge duct 19b, which is separate from the intake duct 19a and also is formed in the body of the connection head 16.

Conveniently, the connection head 16 can be electrically connected to the ground by means of an adapted grounding conductor element 21, so as to provide grounding of the filtering element 6 via the electrical connection of the filtering element 6 to the outer casing 2 provided by the contact lamina 10 and of the outer casing 2 to the connection head 16 via their mutual coupling.

For example, to ground the connection head 16 it is possible to connect a conducting electrical cable, provided with an eyelet, to one of the fixing screws used to fix flanges 27, provided at the intake connection 17 and discharge connection 18 of the connection head 16, to a pump and connect the conducting electrical cable to the ground of the power supply of the pump.

The conducting electrical cable can also be connected, via its eyelet, to a self-tapping screw, which can be screwed into one of the dead holes 28 provided for this purpose in the body of the connection head 16.

Alternatively, grounding of the connection head 16 can be provided simply by fixing the pump, which is usually grounded, directly to the flanges 27 of the connection head 16.

Again with reference to the embodiment shown, the lid 20 is made of an electrically conducting material, such as for example, a metal sheet, and is peripherally connected to the outer casing 2 so as to provide electrical continuity between the lid 20 and the outer casing 2. For example, the connection between the lid 20 and the outer casing 2 is obtained by mechanically folding the edges of the sheet metal that forms the lid 20.

The connection head 16 is furthermore coupled to the outer casing 2 at the lid 20, thus providing electrical continuity between the outer casing 2 and the connection head 16 through the lid 20.

More particularly, the lid 20 is provided with threaded means 22 for mating with the connection head 16.

Conveniently, the threaded mating means 22 comprise a female thread 22a, which is formed at the outlet 5 of the fluid to be filtered from the filtration chamber 3 and can be engaged by a male thread 22b formed, in turn, on the body of the connection head 16.

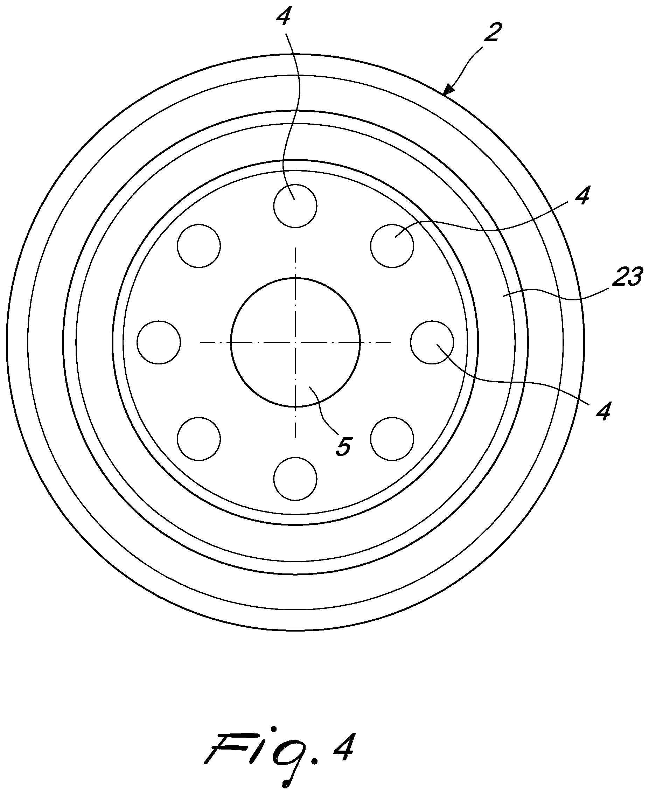

In detail, the outlet 5 is positioned substantially at the center of the lid 20, while the inlets 4 are distributed at angular intervals around the outlet 5, as can be seen in Figure 4.

An annular sealing gasket 23 is positioned between the inlets 4 and the perimetric rim of the lid 20 and is interposed between the lid 20 and the body of the connection head 16.

The intake duct 19a for the fluid to be filtered, formed in the body of the connection head 16, is conveniently arranged substantially coaxially around the discharge duct 19b, so that once the connection head 16 has been mated to the outer casing 2, the intake duct 19a can communicate with the inlets 4 formed in the lid 20 and in turn the discharge duct 19b can communicate with the outlet 5, also formed in the lid 20.

More particularly, the discharge duct 19b is provided with a threaded nipple 24, which bears externally the male thread 22b and protrudes with respect to the face of the body of the connection head 16 that is directed toward the lid 20, while the female thread 22a is formed around the peripheral rim of the outlet 5, so as to allow the screwing of the threaded nipple 24 into the outlet 5, thus providing the mating of the connection head 16 with the lid 20 and the outer casing 2.

Moreover, it should be noted that in order to avoid the accumulation of electrical charges on the painted surfaces of the filter, the outer casing 2 conveniently has an antistatic coating and, more particularly, is treated with a zinc-based antioxidant coating.

Conveniently, an annular sealing ring 25, positioned in the filtration chamber 3, around the outlet 5, ensures the separation between the inside of the sleeve 7 and the annular space 8 of the filtration chamber 3 and the connection of the sleeve 7 to the outlet 5.

The operation of the filter, according to the invention, is as follows.

The fluid to be filtered, passing through the intake connection 17 and the intake duct 19a of the connection head 16, enters the filtration chamber 3 through the inlets 4, flowing into the annular space 8, from where it reaches the inside of the sleeve 7, passing through the filtering element 6, before exiting the filtration chamber 3 through the outlet 5 and reaching the discharge connection 18 of the connection head 16, via the discharge duct 19b.

The electrical charges generated in the filtering element 6 by the triboelectric effect due to the flow of the fluid to be filtered through the filtering element 6 are conveyed by the contact lamina 10 toward the outer casing 2 and, through the lid 20 and the connection head 16, towards the grounding conductor element 21, thus preventing their accumulation in the filtering element 6 and, therefore, the possible occurrence of electrical faults in the filter, with the consequent possibility of using the filter even in potentially explosive environments.

In practice it has been found that the invention achieves the intended aim and objects by providing a fuel and oil filter that is simple to manufacture and economical to produce and is capable of avoiding the problem of the accumulation of electrical charges in the filtering element.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application No. 102024000017272 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A filter (1) for fuels and oils, comprising a substantially cylindrical outer casing (2), which forms internally a filtration chamber (3) which is provided with at least one inlet (4) and at least one outlet (5) for the fluid to be filtered and accommodates at least one filtering element (6) arranged around an inner supporting sleeve (7) arranged substantially coaxially to said outer casing (2), **characterized in that** it comprises means (9) for electrically connecting said filtering element (6) to the ground.

2. The filter according to claim 1, **characterized in that** said outer casing (2) is made of an electrically conducting material and is electrically grounded, said means (9) for electrically connecting said filtering element to the ground comprise means (10) for electrically connecting said filtering element (6) to said outer casing.

3. The filter according to one or more of the preceding claims, **characterized in that** said electrical connection means comprise at least one electrical contact lamina (10), made of an electrically conducting material, said contact lamina (10) having, along its longitudinal extension, at least one first contact portion (10a), in an electrical connection relationship with said filtering element (69, and at least one second contact portion (10b), arranged electrically in contact with the outer casing (2).

4. The filter according to one or more of the preceding claims, **characterized in that** said first contact portion (10a) of said contact lamina (10) is substantially U-shaped, so as to form a receiving region for a terminal edge (6a) of said filtering element (6).

5. The filter according to one or more of the preceding claims, **characterized in that** said second contact portion (10b) comprises a second part (12) of said contact lamina (10) that is extended within the space (8) comprised between said filtering element (6) and said outer casing (2).

6. The filter according to one or more of the preceding claims, **characterized in that** said second part (12) of said contact lamina (10) is inclined with respect to the axis of said outer casing (2) and is elastically flexible toward or away from the axis of said outer casing (2).

7. The filter according to one or more of the preceding claims, **characterized in that** said contact lamina (10) is fixed by welding to said inner supporting sleeve (7).

8. The filter according to one or more of the preceding claims, **characterized in that** said outer casing (2) is closed at one of its axial ends by a bottom wall (2a), said inner supporting sleeve (7) and said filtering element (6) being coupled, at their end directed toward said bottom wall (2a), to a plate (13) which is kept spaced from said bottom wall (2a) by elastic means (14), said contact lamina (10) being interposed, with at least one of its parts, between said filtering element (6) and said plate (13).

9. The filter according to one or more of the preceding claims, **characterized in that** said first contact portion has two lateral arms (15a, 15b) of said U-shape which are substantially parallel and mutually opposite, said lateral arms (15a,15b) being arranged substantially parallel to the axis of said casing and on mutually opposite sides with respect to said filtering element (6), one (15a)of said lateral arms (15a, 15b) being interposed between said inner supporting sleeve (7) and said filtering element (6) and the other (15b) being interposed between said filtering element (6) and a peripheral rim (13a) of said plate (13) which protrudes in the opposite direction with respect to said bottom wall (2a), said lateral arms (15a,15b) being connected to each other by the connecting arm of said U-shape, which is arranged substantially at right angles to the axis of said outer casing (2) and is interposed between the terminal edge (6a) of said filtering element (6) directed toward said plate (13) and said plate.

10. The filter according to one or more of the preceding claims, **characterized in that** said outer casing (2) is removably coupled hermetically to a connection head (16), having a body made of an electrically conducting material, which forms an intake connection (17) and a discharge connection (18) which can be connected to a circuit for the circulation of the fluid to be filtered and are in communication, respectively, with said at least one inlet (4) and with said at least one outlet (4), said connection head (16) being connectable to the ground by means of a conducting element (21).

11. The filter according to one or more of the preceding claims, **characterized in that** said outer casing (2), at its opposite end with respect to said bottom wall (2a), is closed by a lid (20) made of electrically conducting material, which is peripherally connected to said outer casing (2) and is crossed by said at least one inlet (4) and said at least one outlet (5), said lid (20) having threaded means for mating with said connection head (16).

12. The filter according to one or more of the preceding claims, **characterized in that** said outer casing (2) has an antistatic coating.
